# EUROPÄISCHE PATENTSCHRIFT

(11) **EP 0 747 318 B1**
(45) Veröffentlichungstag und Bekanntmachung des Hinweises auf die Patenterteilung: **26.05.1999**
(21) Anmeldenummer: 96106066.2
(22) Anmeldetag: 18.04.1996
(51) Int. Cl.: C01B 17/04

(54) **Verfahren und Vorrichtung zum schnellen Kühlen eines Wasserstoff und Elementarschwefel enthaltenden heissen Gasgemisches**
Process and apparatus for the rapid cooling of a hydrogen and elemental sulfur containing hot gas mixture
Procédé et dispositif pour le refroidissement d'un mélange gazeux contenant de l'hydrogène et du soufre élémentaire

(30) Priorität: 08.06.1995 DE 19520394
(43) Veröffentlichungstag der Anmeldung: 11.12.1996
(73) Patentinhaber: Metallgesellschaft Aktiengesellschaft, 60325 Frankfurt am Main (DE)
(72) Erfinder: Brehm, Lothar, 60598 Frankfurt am Main (DE); Reichel, Dieter, 63741 Aschaffenburg (DE); Vydra, Karel, Dr., 61231 Bad Nauheim (DE); Wagner, Jens, Dr., 60437 Frankfurt am Main (DE); Nehb, Wolfgang, 60431 Frankfurt am Main (DE)

(56) Entgegenhaltungen:
- DE-A- 1 467 119
- FR-A- 2 198 888
- US-A- 2 834 655
- US-A- 2 836 481
- US-A- 4 207 304
- US-A- 4 481 181
- PATENT ABSTRACTS OF JAPAN vol. 14, no. 034 (C-679), 23.Januar 1990 & JP-A-01 270502 (TAKEDA TAKEHIHO), 27.Januar 1989,

## Beschreibung

Die Erfindung betrifft ein Verfahren zum Kühlen eines Verbrennungsgases aus einer Brennkammer, in welcher man ein H₂S-haltiges Gas bei einer maximalen Temperatur im Bereich von etwa 1000 bis 1800°C partiell verbrennt, so daß das Verbrennungsgas SO₂, H₂S, H₂, H₂O und Elementarschwefel enthält, wobei man das Verbrennungsgas unmittelbar anschließend an die Brennkammer durch einen indirekten Wärmeaustauscher leitet, in dessen Kühlraum eine Kühlflüssigkeit zum Abführen der Wärme geleitet wird, sowie eine Vorrichtung hierzu.

Ein solches Verfahren ist aus Patent Abstracts of Japan, Vol. 14, No. 034 und aus US-A-4207304 bekannt. Im Abstract wird in einem einzigen Wärmeaustauscher eine Kühlung des Verbrennungsgases innerhalb von 0,3 Sekunden auf unter 700°C vorgeschlagen. Gemäß US-A-4207304 erfolgt eine schnelle Kühlung des Verbrennungsgases innerhalb von weniger als 0,5 Sekunden auf eine Temperatur unter 427°C und eine weitere Kühlung schließt sich an.

Der Erfindung liegt die Aufgabe zugrunde, das Verbrennungsgas, das z.B. in der Brennkammer einer Claus-Anlage erzeugt wird, in einem angeschlossenen indirekten Wärmeaustauscher schnell zu kühlen. Dabei ist es das Ziel dieser Kühlung, ein gekühltes Gasgemisch zu erzeugen, das molekularen Wasserstoff enthält, der sich nicht mit vorhandenem Elementarschwefel zu H₂S verbunden hat. Erfindungsgemäß gelingt dies beim eingangs genannten Verfahren dadurch, daß man das aus der Brennkammer kommende Verbrennungsgas zunächst im ersten Abschnitt des indirekten Wärmeaustauschers durch zahlreiche Röhren mit kleinem Durchmesser d von 5 bis 50 mm leitet und dabei das Verbrennungsgas auf eine Temperatur von höchstens 800°C während einer Verweilzeit in den Röhren des ersten Abschnitts von höchstens 0,05 Sekunden kühlt und daß man das Verbrennungsgas aus den engen Röhren in Röhren eines zweiten Abschnitts des indirekten Wärmeaustauschers leitet, wobei der Durchmesser D der Röhren des zweiten Abschnitts mindestens 2d beträgt.

Beim Verfahren der Erfindung arbeitet man bevorzugt mit einem einzigen Wärmeaustauscher, der in zwei Abschnitte unterteilt ist, damit man im ersten Abschnitt möglichst intensiv kühlen kann. Auf diese Weise wird eine kostengünstige Apparatur erreicht. Gleichzeitig kann man die Kühlbedingungen im ersten Abschnitt weitgehend unabhängig von den Bedingungen im zweiten Abschnitt regeln.

Im ersten Abschnitt des Wärmeaustausches kühlt man das Gasgemisch so weit, daß sich der Wasserstoff mit dem Elementarschwefel nicht mehr zu H₂S verbinden kann. Man vermeidet aber die Bildung von Kondensat, da dies die engen Röhren teilweise blockieren könnte. Erst im zweiten Abschnitt wo die Röhren einen viel größeren Durchmesser haben, kann man so weit kühlen, daß sich Kondensat und insbesondere flüssiger Schwefel bildet. Der Durchmesser der Röhren eines Abschnitts braucht ersichtlich nicht völlig einheitlich zu sein.

Als Kühlfluid verwendet man üblicherweise in beiden Abschnitten des Wärmeaustauschers Wasser, wobei Wasserdampf erzeugt wird, der zumeist einen Druck im Bereich von 5 bis 30 bar aufweist. Beim erfindungsgemäßen Verfahren kommen prinzipiell auch andere Kühlfluide wie z.B. Luft in Frage. Um die Rekombination von H₂ und Elementarschwefel zu H₂S beim Kühlen des Verbrennungsgases noch mehr zu unterdrücken, empfiehlt sich die Kühlung auf eine Temperatur von höchstens 750°C in den Röhren des ersten Abschnitts des Wärmeaustauschers während einer Verweilzeit des Gases von höchstens 0,03 Sekunden. Vorzugsweise wird während dieser Verweilzeit eine Kühlung auf eine Temperatur im Bereich von 500 - 700 °C erreicht.

Zur Erfindung gehört ferner eine Brennkammer für das partielle Verbrennen eines H₂S-haltigen Gases bei maximalen Temperaturen im Bereich von etwa 1000 bis 1800°C zur Erzeugung eines SO₂, H₂S, H₂, H₂O und Elementarschwefel enthaltenden Verbrennungsgases. Mit der Brennkammer ist ein indirekter Wärmeaustauscher direkt verbunden, der zahlreiche Röhren aufweist, durch welche das Verbrennungsgas strömt. Der Wärmeaustauscher weist einen ersten Abschnitt und einen mit dem ersten Abschnitt verbundenen zweiten Abschnitt auf, dabei sind die Röhren des ersten Abschnitts mit kleinem Durchmesser d von 5 bis 50 mm ausgebildet und die Röhren des zweiten Abschnitts weisen einen größeren Durchmesser D auf, wobei D mindestens gleich 2d ist. Die Auslaßenden der Röhren des ersten Abschnitts liegen im Eintrittsbereich der Röhren des zweiten Abschnitts und jeder Abschnitt weist mindestens eine Zuleitung für Kühlfluid auf.

Durch das erfindungsgemäße Verfahren wird es möglich, aus dem zweiten Abschnitt des Wärmeaustauschers ein Gasgemisch abzuziehen, dessen Gehalt an freiem Wasserstoff, trocken gerechnet, 2 bis 30 Vol.-% beträgt. Dieser Wasserstoff ist in einer Claus-Anlage vor allem zum Hydrieren nützlich, auch wird die Claus-Anlage von einem Teil des umzusetzenden H₂S entlastet. Man erreicht damit eine erhebliche Einsparung an Betriebskosten einer Claus-Anlage, wie sie z.B. aus EP-B-0 455 285 bekannt ist.

Ausgestaltungsmöglichkeiten des Verfahrens und der Vorrichtung werden mit Hilfe der Zeichnung erläutert. Es zeigt:
- Fig. 1: eine Brennkammer mit angeschlossenem Wärmeaustauscherim Längsschnitt in schematischer Darstellung,
- Fig. 2: den Einlaßbereich eines Rohrs des ersten Abschnitts desWärmeaustauschers im Längsschnitt,
- Fig. 3: eine Variante der Einmündung mehrerer Röhren des erstenAbschnitts in ein Rohr des zweiten Abschnitts des Wärmeaustauschers im Längsschnitt,
- Fig. 4: einen Schnitt nach der Linie IV-IV in Fig. 3 in vergrößerter Darstellung,
- Fig. 5: einen Schnitt nach der Linie V-V in Fig. 1 invergrößerter Darstellung,
- Fig. 6: einen Wärmeaustauscher mit Bypassleitung und
- Fig. 7: eine weitere Variante des Wärmeaustauschers.

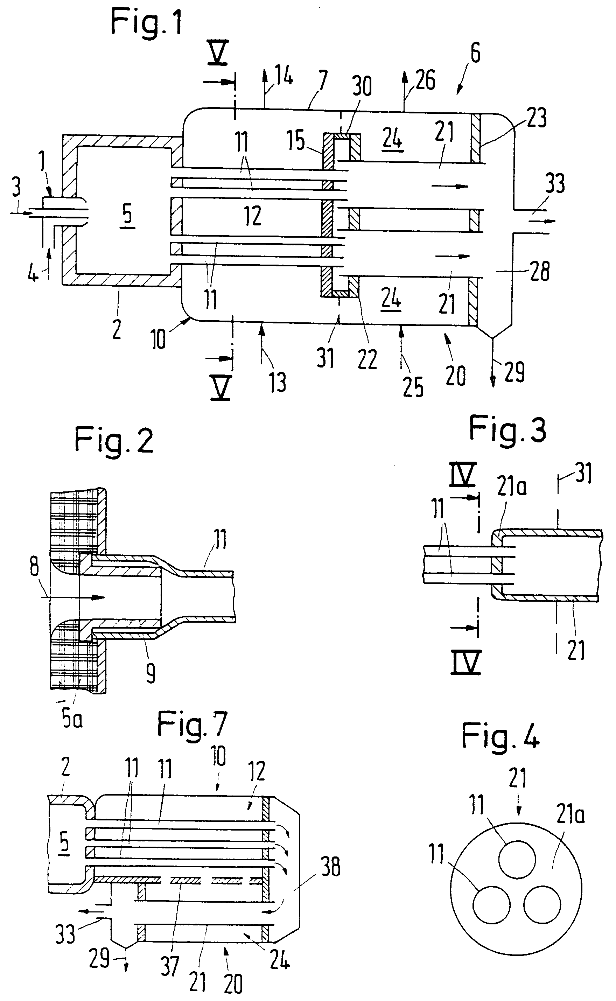

Einem Brenner (1) einer Brennkammer (2) führt man gemäß Fig. 1 durch die Leitung (3) H₂S-haltiges Gas und durch die Leitung (4) sauerstoffhaltiges Gas, z.B. Luft, mit Sauerstoff angereicherte Luft oder auch technisch reinen Sauerstoff, zu. In der Praxis können einer Brennkammer mehrere Brenner zugeordnet sein. Der Verbrennungsraum (5) der Brennkammer (2) ist mit feuerfesten Wänden versehen, da maximale Verbrennungstemperaturen von etwa 1000 bis 1800°C und üblicherweise mindestens 1200°C eingestellt werden.

Durch die hohen Temperaturen bei gleichzeitig unterstöchiometrischer Sauerstoff-Zufuhr entsteht im Verbrennungsraum (5) ein Verbrennungsgas, das neben SO₂, H₂O und restlichem H₂S aufgrund thermischer Spaltung noch H₂ und Elementarschwefel enthält. Im anschließenden Wärmeaustauscher (6) wird durch eine schnelle Kühlung dafür gesorgt, daß nicht der ganze Gehalt an Wasserstoff durch Rekombination mit Schwefel wieder verschwindet. Die dafür nötige schnelle Kühlung der heißen Gase auf höchstens 800°C erfolgt im ersten Abschnitt (10) des Wärmeaustauschers (6). Dieser erste Abschnitt weist zahlreiche enge Röhren (11) auf, die sich im ersten Kühlraum (12) befinden. Kühlfluid, insbesondere Wasser, wird dem ersten Kühlraum (12) durch die Leitung (13) zugeführt, gebildeter Wasserdampf strömt in der Leitung (14) ab. Das Austrittsende der Röhren (11) wird von einem ersten Rohrboden (15) gehalten.

In Fig. 2 ist das Einlaßende eines einzelnen Rohrs (11) dargestellt, in welches das heiße Verbrennungsgas aus dem Verbrennungsraum (5) in Richtung des Pfeils (8) eintritt. Zum Schutz gegen die hohen Temperaturen ist eine Keramikhülse (9) vorgesehen, da die Kühlflüssigkeit, die das Rohr (11) umgibt, in diesem Einlaßbereich erfahrungsgemäß nicht ausreichend wirksam werden kann. (5a) bezeichnet die feuerfeste Auskleidung des Verbrennungsraums (5).

Der zweite Abschnitt (20) des Wärmeaustauschers (6) weist eine verringerte Anzahl von gasführenden Rohren (21) auf, wobei zwei oder mehrere Rohre (11) des ersten Abschnitts einem Rohr (21) des zweiten Abschnitts (20) zugeordnet sind. Das Verhältnis der Durchmesser d der Rohre (11) zum Durchmesser D der Rohre (21) liegt zumeist im Bereich von 1:2 bis 1:5. Die Rohre (21) des zweiten Abschnitts verlaufen zwischen einem zweiten Rohrboden (22) und einem dritten Rohrboden (23). In den zweiten Kühlraum (24) gibt man durch die Leitung (25) Kühlfluid, z.B. Wasser, zu und führt durch die Leitung (26) Wasserdampf ab.

Die beiden Rohrböden (15) und (22) sind durch einen Ring (30) gasdicht verbunden, dazu ist eine gelochte Trennscheibe (31) zwischen dem Ring (30) und dem Gehäuse (7) des Wärmeaustauschers (6) vorgesehen. Diese Trennscheibe (31) sorgt dafür, daß nur ein geringer Flüssigkeitsaustausch zwischen der ersten und zweiten Kühlkammer erfolgt, die Scheibe (31) ist aber für gebildeten Dampf durchlässig, so daß in beiden Kühlräumen (12) und (24) der gleiche Druck herrscht. Gleichzeitig stützt die Scheibe (31) die beiden Rohrböden (15) und (22) gegen das Gehäuse (7) ab.

Es wird dafür gesorgt, daß im ersten Abschnitt (10) des Wärmeaustauschers (6) das Gas während seines Durchströmens durch die Röhren (11) während einer Verweilzeit von höchstens 0,05 Sekunden und vorzugsweise von höchstens 0,03 Sekunden auf eine Temperatur im Bereich von 500-800 °C gekühlt wird. Wie Fig. 1 vereinfacht zeigt, strömt das so gekühlte Gas aus zwei Röhren (11) in ein größeres Rohr (21) des zweiten Kühlabschnitts und wird dort weiter gekühlt. Das aus den Röhren (21) kommende Gasgemisch strömt zunächst in die Sammelkammer (28), wobei gebildetes Kondensat durch die Leitung (29) abgezogen wird. Dieses Kondensat kann z.B. Elementarschwefel enthalten. Schließlich verläßt das Gas, das neben SO₂, H₂O und H₂S noch molekularen Wasserstoff enthält, den Wärmeaustauscher (6) durch den Abzug (33). Das Gas, das durch den Abzug (33) strömt, weist üblicherweise Temperaturen im Bereich von 200 bis 400°C auf und kann in einer Claus-Anlage katalytisch weiterbehandelt werden.

Wenn man auf die in Fig. 1 dargestellten beiden Rohrböden (15) und (22) verzichten will, bietet sich ein Übergang von zwei oder mehreren Röhren (11) in ein größeres Rohr (21) an, wie er in Fig. 3 dargestellt ist. Hier weist das Rohr (21) am Einlaßende einen Deckel (21a) auf, durch den die Rohre (11) abgedichtet hindurchgeführt sind. Die zu Fig. 3 gehörende Fig. 4 zeigt im Schnitt entlang der Linie IV-IV (Fig. 3), wie drei Rohre (11) einem größeren Rohr (21) zugeordnet sind. Aus Gründen der stabilen Anordnung stützen sich mehrere Rohre (21) im Gehäuse (7) des Wärmeaustauschers nahe ihres Deckels (21a) auf einer perforierten Trennwand (31) ab, die in Fig. 3 angedeutet ist.

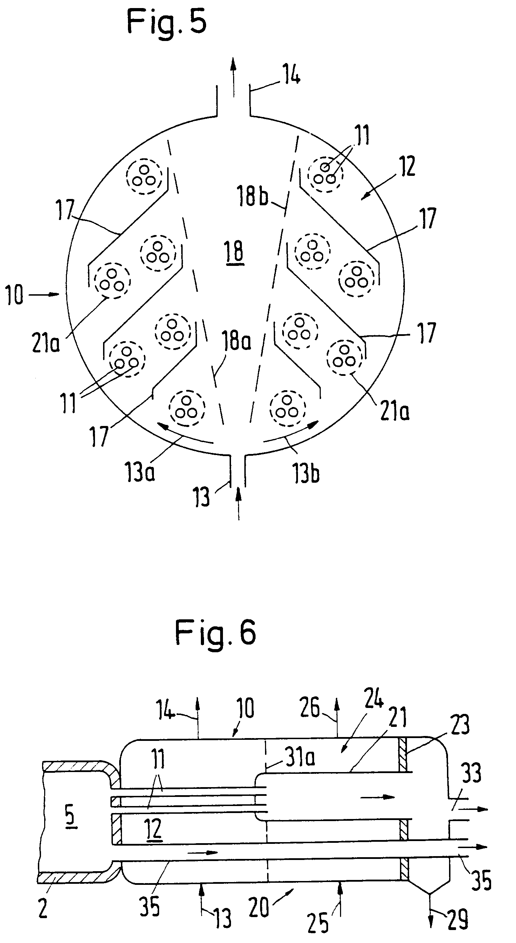

Bei der Verwendung von Kühlwasser zum indirekten Abführen der Wärme der Röhren (11) des ersten Abschnitts (10) kann bei einer großen Anzahl von Röhren das Problem auftreten, daß der gebildete Dampf den Kontakt der Röhren mit dem Kühlfluid erheblich behindert, so daß keine ausreichende Wärmeabfuhr gegeben ist. Um dem zu begegnen, sind gemäß Fig. 5 im ersten Kühlraum (12) dachartig angeordnete Führungswände (17) vorgesehen, die abschnittsweise den gebildeten Wasserdampf in den Mittelbereich (18) leiten. Dieser Mittelbereich (18), der sich keilförmig nach oben zum Dampfauslaß (14) erweitert, ist von Röhren (11) freigehalten. Die gestrichelten Linien (18a) und (18b) deuten die Grenzen des Mittelbereichs (18) an. Das in der Leitung (13) herangeführte Kühlwasser kann nun ungehindert entlang der Pfeile (13a) und (13b) entlang der Innenwand des Gehäuses (7) aufwärts fließen und in Teilströmen durch die von den Leitblechen (17) gebildeten schrägen Gassen jede einzelne der Röhren (11) möglichst gut anströmen. Gleichzeitig kann der an der Außenseite eines jeden Rohrs (11) entstehende Wasserdampf entlang der Unterseite der darüber angeordneten Führungswand (17) in den Mittelbereich (18) gelangen, ohne dabei in störender Weise an anderen Röhren (11) vorbeizuströmen. Als gestrichelte Kreise (21a) sind die weiten Röhren (21) des zweiten Abschnittes angedeutet, vgl. Fig. 1 und 4, in welche jeweils drei enge Röhren (11) des ersten Abschnitts einmünden.

Fig. 6 zeigt einen Wärmeaustauscher mit einer Bypassleitung (35), die von der Brennkammer (2) durchgehend bis zur Sammelkammer (28) geführt ist. Die Menge des durch die Leitung (35) strömenden Gasgemisches kann durch ein Regelorgan eingestellt werden, das in der Zeichnung nicht dargestellt ist. Auf diese Weise läßt sich die Temperatur des Gasgemisches regeln, welches nach dem Wärmeaustauscher weiterverarbeitet wird. Die übrigen Bezugsziffern haben die bereits erläuterte Bedeutung.

Beim Wärmeaustauscher der Fig. 7 können die beiden Abschnitte (10) und (20) übereinander oder nebeneinander angeordnet sein. Zwischen den Kühlräumen (12) und (24) befindet sich eine gas- und flüssigkeitsdurchlässige Wand (37). Das aus den engen Röhren (11) kommende Gas- und Dampfgemisch strömt in die Zwischenkammer (38) und von da durch die weiten Rohren (21) des zweiten Abschnitts (20). Falls sich der zweite Abschnitt unter dem ersten Abschnitt befindet, wird gebildetes Kondensat durch die Leitung (29) abgezogen. In Fig. 7 wurden die Zuleitungen und Ableitungen des Kühlfluids weggelassen.

### Beispiel

In einer Anordnung gemäß Fig. 1 und 5, aber ohne Führungswände (17), weist der Wärmeaustauscher im ersten Abschnitt (10) 279 Rohre aus Stahl mit den Maßen der Spalte A auf:

| | A | B |
|---|---|---|
| Länge | 1,6 m | 6,4 m |
| Außendurchmesser | 20 mm | 52,5 mm |
| Wandstärke | 1,5 mm | 3,9 mm |

Die Maße der 93 Rohre aus Stahl des zweiten Abschnitts sind oben in Spalte B angegeben. Als Kühlfluid dient Wasser und es wird Sattdampf von 15 bar erzeugt.

Der Brennkammer (2) einer Claus-Anlage wird Gas gemäß Spalte C der nachfolgenden Tabelle sowie 4900 Nm³/h Luft und 644 Nm³/h technisch reiner Sauerstoff zugeführt:

| | C | D | E | F |
|---|---|---|---|---|
| Menge (Nm³/h) | 3560 | 7930 | 7460 | 6950 |
| H₂S (Vol%) | 77,1 | 5,2 | 8,8 | 7,3 |
| H₂O (Vol%) | 12,3 | 32,5 | 33,9 | 38,6 |
| NH₃ (Vol%) | 5,6 | 1,1 | - | - |
| CO (Vol%) | 4,5 | - | - | - |
| SO₂ (Vol%) | - | 4,0 | 4,6 | 3,8 |
| H₂ (Vol%) | - | 7,2 | 4,9 | 5,2 |
| CO₂ (Vol%) | 0,5 | 1,4 | - | - |
| COS (Vol%) | - | 0,03 | < 0,01 | < 0,01 |
| Temperatur | 40 | 1416 | 675 | 353 |

Die maximale Temperatur in der Brennkammer beträgt 1416 °C. Ein Gasgemisch mit dieser Temperatur und der Zusammensetzung gemäß Spalte D der obigen Tabelle strömt durch die 279 Rohre des ersten Abschnitts, der N-Anteil des Gemisches und Spuren anderer Gase sind in der Tabelle nicht berücksichtigt. Während einer Verweilzeit in den Röhren (11) von 24 msec wird das Gasgemisch auf eine Temperatur von 675 °C gekühlt. Mit dieser Temperatur und den in Spalte E in der obigen Tabelle angegebenen Komponenten tritt das Gasgemisch in den zweiten Abschnitt (21) ein. Auf 353 °C gekühlt verläßt das Gasgemisch mit den Komponenten gemäß Spalte F der obigen Tabelle den zweiten Abschnitt (21) des Wärmeaustauschers, wobei gleichzeitig pro Stunde 2040 kg flüssiger Elementarschwefel abgezogen werden. Die Daten der Spalten D und E wurden berechnet.

## Patentansprüche

1. Verfahren zum Kühlen eines Verbrennungsgases aus einer Brennkammer, in welcher man ein H₂S-haltiges Gas bei einer maximalen Temperatur im Bereich von etwa 1000 bis 1800°C partiell verbrennt, so daß das Verbrennungsgas SO₂, H₂S H₂, H₂O, und Elementarschwefel enthält, wobei man das Verbrennungsgas unmittelbar anschließend an die Brennkammer durch einen indirekten Wärmeaustauscher leitet, in dessen Kühlraum ein Kühlfluid zum Abführen der Wärme geleitet wird, dadurch gekennzeichnet, daß man das aus der Brennkammer kommende Verbrennungsgas zunächst im ersten Abschnitt des indirekten Wärmeaustauschers durch zahlreiche Röhren mit kleinem Durchmesser d von 5 bis 50 mm leitet und dabei das Verbrennungsgas auf eine Temperatur von höchstens 800°C während einer Verweilzeit in den Röhren des ersten Abschnitts von höchstens 0,05 Sekunden kühlt und daß man das Verbrennungsgas aus den engen Röhren in Röhren eines zweiten Abschnitts des indirekten Wärmeaustauschers leitet, wobei der Durchmesser D der Röhren des zweiten Abschnitts mindestens 2d beträgt.

2. Verfahren nach Anspruch 1, dadurch gekennzeichnet, daß die Kühlung des Verbrennungsgases auf eine Temperatur von höchstens 750°C in den Röhren des ersten Abschnitts während einer Verweilzeit des Gases von höchstens 0,03 Sekunden erreicht wird.

3. Verfahren nach Anspruch 1 oder 2, dadurch gekennzeichnet, daß der zum ersten Abschnitt des Wärmeaustauschers gehörende erste Kühlraum eine erste Zuleitung für Kühlfluid und einen ersten Dampfabzug und der zum zweiten Abschnitt des Wärmeaustauschers gehörende zweite Kühlraum eine zweite Zuleitung für Kühlfluid und einen zweiten Dampfabzug besitzt.

4. Verfahren nach Anspruch 1 oder einem der folgenden, dadurch gekennzeichnet, daß der Druck in den von Kühlfluid durchströmten Räumen des Wärmeaustauschers gleich ist.

5. Brennkammer für das partielle Verbrennen eines H₂S-haltigen Gases bei maximalen Temperaturen im Bereich von etwa 1000 bis 1800°C zur Erzeugung eines SO₂, H₂S, H₂, H₂O und Elementarschwefel enthaltenden Verbrennungsgases, mit einem mit der Brennkammer direkt verbundenen indirekten Wärmeaustauscher mit zahlreichen Röhren, in welche das Verbrennungsgas aus der Brennkammer direkt eintritt, wobei Wärme durch ein Kühlfluid abgeführt wird, welches einem die Röhren umgebenden Kühlraum zugeführt wird und wobei der Wärmeaustauscher einen an die Brennkammer anschließenden ersten Abschnitt und einen mit dem ersten Abschnitt verbundenen zweiten Abschnitt aufweist, dadurch gekennzeichnet, daß der erste Abschnitt zahlreiche Röhren mit kleinem Durchmesser d von 5 bis 50 mm aufweist, daß der zweite Abschnitt Röhren mit größerem Durchmesser D aufweist, wobei D mindestens gleich 2d ist, daß die Auslaßenden der Röhren des ersten Abschnitts im Eintrittsbereich der Röhren des zweiten Abschnitts liegen und daß jeder Abschnitt mindestens eine Zuleitung für Kühlfluid aufweist.

6. Brennkammer nach Anspruch 5, dadurch gekennzeichnet, daß die Röhren des ersten Abschnitts in der Nähe ihres Auslaßendes durch einen ersten Rohrboden und die Röhren des zweiten Abschnitts in der Nähe ihres Eintrittsendes durch einen zweiten Rohrboden geführt sind und daß die beiden Rohrböden miteinander verbunden sind.

7. Brennkammer nach Anspruch 5, dadurch gekennzeichnet, daß die Röhren des zweiten Abschnitts an ihrem Eintrittsende jeweils mit einem Deckel versehen sind und daß durch einen Deckel die Auslaßenden von mindestens zwei Röhren des ersten Abschnitts hindurchgeführt sind. Auslaßenden von mindestens zwei Röhren des ersten Abschnitts hindurchgeführt sind.

8. Brennkammer nach einem der Ansprüche 5 bis 7, dadurch gekennzeichnet, daß der zum ersten Abschnitt gehörende erste Kühlraum vom zweiten Kühlraum, der zum zweiten Abschnitt gehört, durch eine gasdurchlässige Wand teilweise abgetrennt ist.

9. Brennkammer nach einem der Ansprüche 5 bis 8, dadurch gekennzeichnet, daß der Kühlraum des ersten Abschnitts dachartig angeordnete Führungswände aufweist.

10. Brennkammer nach Anspruch 5, dadurch gekennzeichnet, daß der erste und zweite Abschnitt übereinander oder nebeneinander angeordnet sind und die Auslaßenden der Röhren der ersten Abschnitts und die Einlaßenden der Röhren des zweiten Abschnitts durch eine Zwischenkammer verbunden sind.

11. Brennkammer nach einem der Ansprüche 5 - 10, dadurch gekennzeichnet, daß eine Bypassleitung durch den ersten und zweiten Abschnitt geführt ist.

## Claims

1. A method for cooling a combustion gas from a combustion chamber in which an H₂S-containing gas is partially burned at a maximum temperature in the range from about 1000 to 1800°C, so that the combustion gas contains SO₂, H₂S, H₂, H₂O and elemental sulphur, the combustion gas immediately following the combustion chamber being passed through an indirect heat exchanger, in the cooling space of which a cooling fluid is guided for dissipating the heat, characterised in that the combustion gas coming from the combustion chamber is first passed through numerous tubes of a small diameter d of 5 to 50 mm in the first section of the indirect heat exchanger and in so doing the combustion gas is cooled to a temperature of at most 800°C over a dwell time in the tubes of the first section of at most 0.05 seconds and that the combustion gas is passed from the narrow tubes into tubes of a second section of the indirect heat exchanger, the diameter D of the tubes of the second section being at least 2d.

2. A method according to Claim 1, characterised in that the cooling of the combustion gas to a temperature of at most 750°C in the tubes of the first section is achieved over a dwell time of the gas of at most 0.03 seconds.

3. A method according to Claim 1 or 2, characterised in that the first cooling space belonging to the first section of the heat exchanger has a first feed line for cooling fluid and a first vapour extraction means and the second cooling space belonging to the second section of the heat exchanger has a second feed line for cooling fluid and a second vapour extraction means.

4. A method according to Claim 1 or one of the following claims, characterised in that the pressure in the spaces in the heat exchanger through which cooling fluid flows is the same.

5. A combustion chamber for the partial combustion of an H₂S-containing gas at maximum temperatures in the range from about 1000 to 1800°C to produce a combustion gas containing SO₂, H₂S, H₂, H₂O and elemental sulphur, having an indirect heat exchanger directly connected to the combustion chamber with numerous tubes into which the combustion gas enters directly from the combustion chamber, with heat being dissipated by a cooling fluid which is fed to a cooling space surrounding the tubes and the heat exchanger having a first section adjoining the combustion chamber and a second section connected to the first section, characterized in that the first section has numerous tubes of a small diameter d of 5 to 50 mm, that the second section has tubes of a larger diameter D, D being equal to at least 2d, that the outlet ends of the tubes of the first section are located in the entry region of the tubes of the second section and that each section has at least one feed line for cooling fluid.

6. A combustion chamber according to Claim 5, characterised in that the tubes of the first section are guided in the vicinity of their outlet ends through a first tube plate and the tubes of the second section are guided in the vicinity of their inlet ends through a second tube plate, and that the two tube plates are joined together.

7. A combustion chamber according to Claim 5, characterised in that the tubes of the second section are each provided with a cover at their inlet ends and that the outlet ends of at least two tubes of the first section are passed through a cover.

8. A combustion chamber according to one of Claims 5 to 7, characterised in that the first cooling chamber, which belongs to the first section, is partially separated from the second cooling chamber, which belongs to the second section, by a gas-permeable wall.

9. A combustion chamber according to one of Claims 5 to 8, characterised in that the cooling chamber of the first section has guide walls arranged in roof-like manner.

10. A combustion chamber according to Claim 5, characterised in that the first and second sections are arranged above one another or next to one another and the outlet ends of the tubes of the first section and the inlet ends of the tubes of the second section are joined by an intermediate chamber.

11. A combustion chamber according to one of Claims 5 - 10, characterised in that a bypass line is passed through the first and second sections.

## Revendications

1. Procédé de refroidissement d'un gaz de combustion provenant d'une chambre de combustion, qui consiste à brûler partiellement un gaz contenant du H₂S à une température maximum de l'ordre de 1000 à 1800°C environ de manière que le gaz de combustion contienne du SO₂, du H₂S, du H₂, de l'H₂O et du soufre élémentaire, le gaz de combustion étant envoyé, directement après la chambre de combustion, dans un échangeur de chaleur par voie indirecte, dans la chambre de refroidissement duquel un fluide de refroidissement est envoyé pour l'évacuation de la chaleur, caractérisé en ce qu'il consiste à envoyer le gaz de combustion sortant de la chambre de combustion d'abord, dans une première partie de l'échangeur de chaleur par voie indirecte, dans un grand nombre de tubes de petit diamètre d de 5 à 50 mm et ainsi à refroidir le gaz de combustion à une température de 800°C au plus pendant une durée de séjour dans les tubes de la première partie de 0,05 s au plus et à envoyer le gaz de combustion sortant des tubes étroits dans des tubes d'une deuxième partie de l'échangeur de chaleur par voie indirecte, le diamètre D des tubes de la deuxième partie étant au moins égal à 2d.

2. Procédé suivant la revendication 1, caractérisé en ce que le refroidissement du gaz de combustion à une température de 750°C au plus dans les tubes de la première partie est obtenu pendant une durée de séjour du gaz de 0,03 s au plus.

3. Procédé suivant la revendication 1 ou 2, caractérisé en ce que la première chambre de refroidissement appartenant à la première partie de l'échangeur de chaleur a un premier conduit d'amenée du fluide de refroidissement et une première évacuation de vapeur et la deuxième chambre de refroidissement appartenant à la deuxième partie de l'échangeur de chaleur a un deuxième conduit d'amenée pour le fluide de refroidissement et une deuxième évacuation de vapeur.

4. Procédé suivant la revendication 1 ou l'une des suivantes, caractérisé en ce que la pression est la même dans les chambres de l'échangeur de chaleur, dans lesquelles passe du fluide de refroidissement.

5. Chambre de combustion pour la combustion partielle d'un gaz contenant du H₂S à des températures maximum de l'ordre de 1000 à 1800°C environ pour la production d'un gaz de combustion contenant du SO₂, du H₂S, du H₂, de l'H₂O et du soufre élémentaire, comprenant un échangeur de chaleur par voie indirecte, qui communique directement avec la chambre de combustion et qui comporte un grand nombre de tubes dans lesquels le gaz de combustion pénètre directement à partir de la chambre de combustion, de la chaleur étant évacuée par un fluide de refroidissement qui est envoyé à une chambre de refroidissement entourant les tubes et l'échangeur de chaleur comportant une première partie se raccordant à la chambre de combustion et une seconde partie communiquant avec la première partie, caractérisée en ce que la première partie a un grand nombre de tubes de petits diamètres d de 5 à 50 mm, en ce que la deuxième partie a des tubes de diamètre D plus grand D étant au moins égal à 2d, en ce que les extrémités de sortie des tubes de la première partie se trouvent dans la zone d'entrée des tubes de la deuxième partie et en ce que chaque partie a au moins un conduit d'amenée pour du fluide de refroidissement.

6. Chambre de combustion suivant la revendication 5, caractérisée en ce que les tubes de la première partie passent à proximité de leur extrémité de sortie à travers une première plaque tubulaire et les tubes de la deuxième partie passent à proximité de leur extrémité d'entrée à travers une deuxième plaque tubulaire et en ce que les deux plaques tubulaires sont reliées entre elles.

7. Chambre de combustion suivant la revendication 5, caractérisée en ce que les tubes de la deuxième partie sont munis à leur extrémité d'entrée respectivement d'un couvercle et en ce que les extrémités de sortie d'au moins deux tubes de la première partie passent à travers le couvercle.

8. Chambre de combustion suivant l'une des revendications 5 à 7, caractérisée en ce que la première chambre de refroidissement appartenant à la première partie est séparée partiellement de la deuxième chambre de refroidissement, qui appartient à la deuxième partie, par une paroi perméable au gaz.

9. Chambre de combustion suivant l'une des revendications 5 à 8, caractérisée en ce que la chambre de refroidissement de la première partie comporte des parois disposées à la manière d'un toit.

10. Chambre de combustion suivant la revendication 5, caractérisée en ce que la première partie et la deuxième partie sont superposées ou juxtaposées, les extrémités de sortie des tubes de la première partie et les extrémités d'entrée des tubes de la deuxième partie communiquant par une chambre intermédiaire.

11. Chambre de combustion suivant l'une des revendications 5 à 10, caractérisée en ce qu'un conduit de dérivation passe dans la première partie et dans la deuxième partie.
